# FASCICULE DE BREVET EUROPEEN

(11) **EP 3 244 032 B1**
(45) Date de publication et mention de la délivrance du brevet: **27.02.2019**
(21) Numéro de dépôt: 17166794.2
(22) Date de dépôt: 18.04.2017
(51) Int. Cl.: F01N 3/20, F01N 11/00, F01N 13/00

(54) **PROCÉDÉ DE TEST D'UNITÉ DE DÉPOLLUTION DE VÉHICULE AUTOMOBILE**
TESTVERFAHREN EINER REINIGUNGSEINHEIT EINES KRAFTFAHRZEUGS
METHOD FOR TESTING A POLLUTION-REMOVAL UNIT OF A MOTOR VEHICLE

(30) Priorité: 12.05.2016 FR 1654219
(43) Date de publication de la demande: 15.11.2017
(73) Titulaire: PSA Automobiles SA, 78300 Poissy (FR)
(72) Inventeur: SUY, DARA, 92400 COURBEVOIE (FR); BERNARD, YOAN, 78570 ANDRESY (FR); PICARD, GUILLAUME, 78990 ELANCOURT (FR)

(56) Documents cités:
- WO-A1-2013/147653
- US-B2- 8 240 194

## Description

La présente invention concerne de manière générale un procédé pour tester le fonctionnement d'un dispositif de dépollution qui comprend plusieurs modules de traitement d'oxydes d'azote par réduction catalytique sélective (SCR pour selective catalyst reduction en anglais). En particulier, l'invention a pour but de détecter si un des modules de traitement présente une dégradation de sa capacité de stockage d'agent réducteur des oxydes d'azote. En pareil cas, plusieurs problèmes apparaissent, notamment et tout d'abord, la capacité de traitement des oxydes d'azotes est diminuée, ce qui peut entraîner des rejets d'oxydes d'azote dans l'atmosphère. Ensuite, il est également possible qu'une partie de l'agent réducteur injecté pour réagir avec les oxydes d'azote soit également rejeté. Dans le cas de l'ammoniac, une odeur désagréable peut ainsi être perçue et dégrader la qualité perçue.

Le document US8240194 décrit plusieurs méthodes pour le diagnostic d'un système de dépollution comprenant deux modules de traitement d'oxydes d'azote par réduction catalytique sélective en série, mais ces méthodes sont complexes à mettre en oeuvre, en particulier quand ces méthodes comprennent une mise a température spécifique pour chaque module de traitement.

Le document WO 2013/147653 A1 concerne un procédé pour diagnostiquer un catalyseur de réduction catalytique sélective (SCR) d'un système de post-traitement de gaz d'échappement d'un moteur à combustion interne.

Un but de la présente invention est de répondre aux inconvénients des documents de l'art antérieur mentionnés ci-dessus et en particulier, tout d'abord, de proposer un procédé de test d'une pluralité de modules de traitement d'oxydes d'azote par réduction catalytique sélective qui reste simple à mettre en oeuvre, et qui fournit une indication fiable quant à l'intégrité des modules de traitement.

Pour cela un premier aspect de l'invention concerne un procédé de test d'une pluralité de modules de traitement de gaz d'échappement d'un véhicule automobile installés le long d'une ligne d'échappement et comprenant :
- une pluralité de modules de traitement d'oxydes d'azote par réduction catalytique sélective, chaque module de traitement étant agencé pour pouvoir stocker une masse d'ammoniac maximale,
- des moyens d'injection d'ammoniac ou d'un précurseur de l'ammoniac, tel que de l'urée, en amont de la pluralité de modules de traitement des oxydes d'azote,
- des moyens de mesure de présence d'au moins une espèce parmi les oxydes d'azote et l'ammoniac, en aval de la pluralité de modules de traitement,
le procédé comprenant :
une phase de test avec les étapes consistant à :
   - stopper pendant un temps prédéterminé une injection d'ammoniac ou de précurseur de l'ammoniac,
   - injecter, en amont des modules de traitement, une quantité d'ammoniac ou de précurseur d'ammoniac, conduisant à une masse d'ammoniac à stocker au moins supérieure à une masse de stockage maximale d'ammoniac d'un seul module de traitement et inférieure à la somme des masses de stockage maximales de tous les modules de traitement,
   - mesurer un taux d'ammoniac et/ou d'oxydes d'azote en aval de la pluralité de modules de traitement,
une phase d'analyse avec l'étape consistant à :
   - comparer le taux d'ammoniac et/ou d'oxydes d'azote mesuré avec un seuil prédéterminé.

Le procédé selon la mise en oeuvre ci-dessus permet de vérifier simplement que tous les modules de traitement (formant donc une unité de dépollution) sont intègres et peuvent stocker de l'ammoniac. En effet, si un des modules de traitement est dégradé et ne peut stocker de l'ammoniac comme prévu, alors pendant la phase d'injection d'une quantité d'ammoniac ou de précurseur conduisant à une quantité supérieure à ce qu'un seul des modules de traitement peut stocker, alors de l'ammoniac et/ou de l'oxyde d'azotes passera au travers des modules de traitement sans être respectivement stocké ou traité (par le module dégradé). Le procédé est fiable, car l'étape préliminaire consistant à stopper l'injection d'ammoniac ou de précurseur d'ammoniac permet d'obtenir des modules de traitement non chargés ou exempts d'ammoniac, qui doivent théoriquement stocker tout l'ammoniac qui sera injecté ensuite.

Bien entendu le procédé est mis en oeuvre lors du fonctionnement du moteur.

Avantageusement :
la phase de test comprend une étape consistant à :
   - mesurer une température des gaz d'échappement, et
la phase d'analyse comprend une étape consistant à :
   - avant l'étape de comparaison avec le seuil prédéterminé, corriger les taux d'ammoniac et/ou d'oxydes d'azote mesuré et/ou le seuil prédéterminé, en fonction de la température mesurée.

On peut aussi prévoir de ne mettre en oeuvre le procédé que lorsque la température mesurée est dans une plage adéquate.

La mise en oeuvre ci-dessus, avec prise en compte de la température permet de corriger des valeurs de mesure ou de seuils en tenant compte des cinétiques de réaction qui sont modifiées par la température, et/ou des dérives de mesure des capteurs d'ammoniac et/ou d'oxydes d'azote, en fonction de la température. En d'autres termes, la précision de la mesure est améliorée.

Avantageusement, la phase de test est initiée après une phase de régénération d'un filtre à particules de la ligne d'échappement du véhicule. Une phase de régénération d'un filtre à particule a pour effet, en raison des hautes températures, de "vider" ou "empêcher" le stockage de l'ammoniac dans les modules de traitement. Démarrer le test immédiatement après permet de réduire le temps de coupure d'injection d'urée ou d'ammoniac (pendant lequel la dépollution est inopérante). De plus, si un des modules de traitements est aussi un filtre, cela permet de détecter au plus tôt une dégradation du module, car la régénération sollicite les revêtement catalytiques.

Avantageusement, au moins l'un des modules de traitement forme un filtre à particules Un tel module de traitement des oxydes d'azote par réduction catalytique sélective faisant également office de filtre permet de limiter le nombre de modules sur la ligne d'échappement, en cumulant le nombre de fonctions sur un même module de traitement (des oxydes d'azote et des particules dans ce cas). Un tel module peut être appelé SCRF (pour Selective Catalyst Reduction Filter en anglais). Une particularité de ces modules de traitement formant filtre à particule est qu'ils peuvent soumis à de hautes températures, ce qui peut affecter à la longue le traitement de surface qui a pour fonction de fixer ou capter l'ammoniac pour la réduction catalytique sélective. Leur longévité peut alors être inférieure à celle d'un module de traitement des oxydes d'azote conventionnel.

Avantageusement, l'étape de comparaison du taux d'ammoniac et/ou d'oxydes d'azote mesuré avec un seuil prédéterminé est suivie d'une étape consistant à envoyer un message d'alerte à un utilisateur, si le taux d'ammoniac et/ou d'oxydes d'azote mesuré est supérieur au seuil prédéterminé.

Avantageusement, l'étape consistant à injecter une quantité d'ammoniac, ou de précurseur d'ammoniac, comprend :
- une étape de chargement pendant laquelle un premier débit d'ammoniac ou de précurseur d'ammoniac est injecté pour que la quantité d'ammoniac à stocker par les modules de traitement arrive à une consigne de stockage, et
- une étape de maintient pendant laquelle un deuxième débit d'ammoniac ou de précurseur d'ammoniac, inférieur au premier débit d'ammoniac ou de précurseur d'ammoniac, est injecté pour maintenir la quantité d'ammoniac à stocker à la consigne de stockage. En d'autres termes, après la coupure totale de l'injection d'ammoniac ou de son précurseur (urée), on injecte une grande quantité d'ammoniac ou de son précurseur pour obtenir un accroissement au cours du temps de la masse d'ammoniac chargé par les modules de traitement (étape de chargement) jusqu'à arriver presque à chargement complet des modules de traitement, et ensuite, on injecte la juste quantité d'ammoniac ou de son précurseur pour maintenir ce niveau de chargement (la consigne). Ainsi, les modules de traitement, s'ils sont en bon état, ne doivent pas rejeter d'ammoniac ni d'oxydes d'azote, mais sont tout proche de le faire. Une dégradation d'un module de traitement entrainera un rejet d'ammoniac qui sera détecté.

Avantageusement, la phase d'analyse comprend une étape consistant à :
- enregistrer dans une mémoire le résultat de comparaison comme un résultat conforme si le taux mesuré est inférieur au seuil prédéterminé et comme un résultat non conforme si le taux mesuré est supérieur au seuil prédéterminé, et
si le résultat est non conforme, l'étape de comparaison de la phase d'analyse est suivie de :
- une étape consistant à planifier une relance de la phase de test et de la phase d'analyse.

On peut envisager d'adapter la limite maximale d'injection d'ammoniac ou de son précurseur en fonction du taux d'ammoniac et/ou d'oxydes d'azote mesuré pendant la phase de test.

La mise en oeuvre ci-dessus permet d'adapter au mieux le fonctionnement du moteur et de l'unité de dépollution, en fonction des résultats de la phase de test immédiatement réalisée, mais aussi en fonction de l'historique des tests.

Un deuxième aspect de l'invention concerne un véhicule automobile comprenant une ligne d'échappement avec une unité de dépollution comprenant :
- une pluralité de modules de traitement d'oxydes d'azote par réduction catalytique sélective, chaque module de traitement étant agencé pour pouvoir stocker une masse d'ammoniac maximale,
- des moyens d'injection d'ammoniac ou d'un précurseur de l'ammoniac, tel que de l'urée, en amont de la pluralité de modules de traitement des oxydes d'azote,
- des moyens de mesure de présence d'au moins une espèce parmi les oxydes d'azote et l'ammoniac, en aval de la pluralité de modules de traitement,
le véhicule comprenant une unité de commande agencée pour mettre en oeuvre le procédé de test selon le premier aspect de l'invention.

Avantageusement, au moins l'un des modules de traitement forme un filtre à particules.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une ligne d'échappement équipée de modules de traitement d'oxydes d'azote ;
- les figures 2a, 2b, 2c, et 2d représentent des courbes représentatives des étapes mises en oeuvre par le procédé de test selon l'invention ;
- la figure 3 représente une grille de décision qui peut être suivie suite à la mise en oeuvre des étapes de test du procédé selon l'invention.

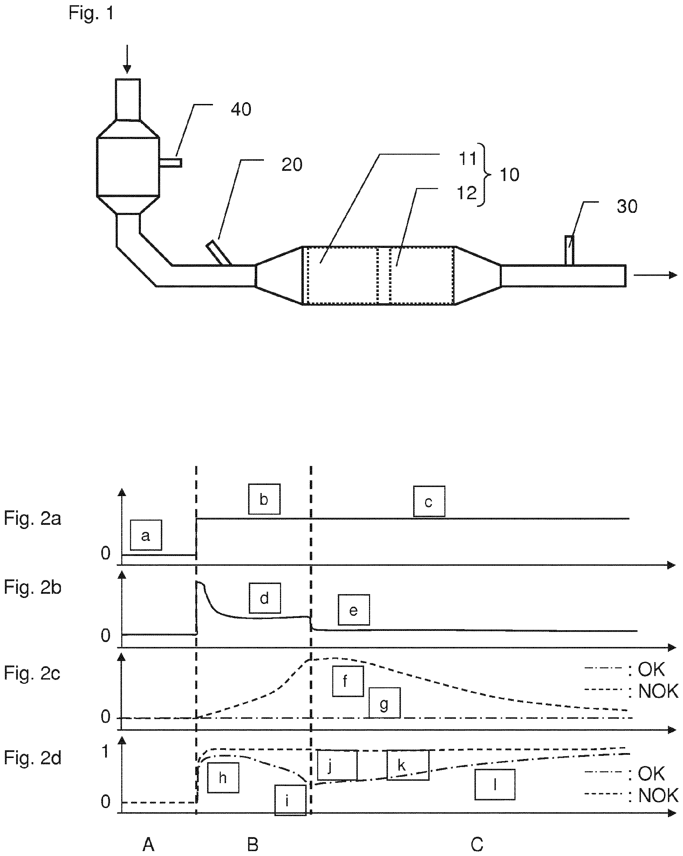

La figure 1 représente une ligne d'échappement qui comprend notamment une unité de dépollution 10 avec deux modules de traitement 11 et 12 des oxydes d'azote par réduction catalytique sélective. A cet effet la ligne d'échappement comprend également des moyens d'injection 20 d'ammoniac ou d'un précurseur de l'ammoniac (typiquement un mélange contenant de l'urée), agencés pour injecter en amont des deux modules de traitement 11 et 12 de l'ammoniac ou le précurseur de l'ammoniac. Enfin la ligne d'échappement comprend aussi des moyens de mesure 30 et 40 de taux ou de présence d'ammoniac et/ou d'oxydes d'azote dans les gaz d'échappement respectivement en aval et en amont des deux modules de traitement 11 et 12.

Comme déjà évoqué, les moyens d'injection 20 et l'unité de dépollution 10 (les deux modules de traitement 11 et 12) des NOₓ, servent à réduire les oxydes d'azote NOₓ (NO, NO₂, ...) produits lors du fonctionnement du moteur.

En particulier, l'unité de dépollution 10 traite les oxydes d'azote NOₓ (NO, NO₂, ...). Le principe de la réduction de ces NOₓ par réduction catalytique sélective, ci après appelée SCR, et peut se décomposer en deux grandes étapes :
1 > Formation du réducteur (NH₃) à partir d'Adblue ® qui est un mélange d'urée à 32,5% et d'eau injecté dans la ligne d'échappement par les moyens d'injection 20 :

   (NH₂)₂CO → NH₃ + HNCO (R1)

   thermolyse de l'urée

   HNCO + H₂O → NH₃ + CO₂ (R2)

   hydrolyse de l'acide isocyanique
   La décomposition de l'urée, injectée par les moyens d'injection 20 dans une boîte de mélange en amont de l'unité SCR peut se faire en deux étapes : une première appelée « thermolyse » qui forme une molécule de NH₃ et une molécule d'acide isocyanique (HNCO) et une seconde qui forme la seconde molécule de NH₃ à partir de l'hydrolyse de l'acide isocyanique. Cette étape permet de former le réducteur indispensable au fonctionnement de la réduction SCR.
2 > Réduction catalytique sélective des NOₓ par NH₃ par les revêtements SCR de l'unité SCR (unité de dépollution 10) :

   4 NO + O₂ + 4 NH₃ → 4 N₂ + 6 H₂O (R3)

   SCR standard

   NO + NO₂ + 2 NH₃ → 2 N₂ + 3 H₂O (R4)

   SCR à cinétique rapide

   6 NO₂ + 8 NH₃ →7N₂+12H₂O (R5)

   SCR à cinétique lente

Plusieurs réactions peuvent avoir lieu (R3 à R5), mais la conversion optimale et recherchée des NOₓ est obtenue grâce à la réaction (R4) dont la cinétique est la plus rapide. Le catalyseur de l'unité SCR peut être à base de zéolithes échangées au fer, comme les zéolithes β, la ferferriérite, la ZSM5, Le substrat peut être aussi en cordiérite.

L'unité de dépollution 10 est constituée de deux modules de traitement, un module de traitement 11, et un module de traitement 12, qui forme également un filtre à particules. Dans ce cas, le traitement de surface du module de traitement 12 peut être dégradé, et il perd sa capacité de stockage de l'ammoniac. L'invention propose de détecter une éventuelle dégradation d'un des deux modules de traitement en appliquant les étapes représentés figures 2a, 2b, 2c et 2d.

La figure 2a représente une consigne de stockage d'ammoniac dans les modules de traitement 11 et 12.

La figure 2b représente des valeurs de débit d'injection d'urée par les moyens d'injection 20.

La figure 2c représente des mesures de taux d'ammoniac et/ou d'oxydes d'azote effectuées par les moyens de mesure 30, en aval des modules 11 et 12. Typiquement, il s'agit d'un capteur qui détecte aussi bien l'ammoniac que les oxydes d'azote.

La figure 2d représente des valeurs de signal d'efficacité de la dépollution mesurée par le procédé selon l'invention (par rapport à un module de traitement neuf et idéal).

La phase de test du procédé selon l'invention peut se diviser en trois phases :
Phase A : phase de vidange pendant laquelle l'injection d'urée est coupée afin de consommer tout le l'ammoniac contenu dans les modules de traitement 11 et 12 pour commencer la phase suivante avec une masse chargée nulle.
Phase B : phase de chargement des modules de traitement 11 et 12 en ammoniac jusqu'à la consigne de chargement utilisée pour le test
Phase C : phase de maintien de la masse chargée à la consigne. La phase de chargement prend fin lorsque la masse chargée atteint le minimum entre la consigne ou la masse maximale d'ammoniac autorisée. La phase de maintien est limitée dans le temps par un délai que l'on peut ajuster.

Le test est idéalement lancé après une régénération du filtre à particules (module de traitement 12), d'une part pour détecter au plus vite une pièce dégradée, d'autre part pour profiter du faible chargement en ammoniac de l'unité de dépollution 10 et limiter la durée de la phase de vidange de l'unité de dépollution 10 (c'est-à-dire une phase sans injection d'urée) qui précède le test. Toutefois, au cas où un test serait interrompu sur demande du système de contrôle moteur, celui-ci pourrait être relancé sans être nécessairement précédé d'une régénération du filtre à particules. Dans ce cas il sera précédé d'une phase de vidange pendant laquelle l'injection d'urée est coupée afin de consommer l'ammoniac déjà stocké dans l'unité de dépollution 10 jusqu'à ce que la masse d'ammoniac soit proche de 0. Une horloge interne permet également au test de s'interrompre de lui-même si celui-ci dure trop longtemps ; cela permet de limiter la durée d'un test dans le temps pour ne pas perturber les performances du véhicule.

Phase B : lors de la phase de chargement, l'efficacité mesurée part d'une valeur proche de 0 (figure 2d), pour arriver à une valeur proche de 1, son maximum. Dans le cas d'une dégradation du module de traitement 12 qui forme un filtre à particule, ci après dénommé SCRF (pour Selective Catalyst Reduction Filter en anglais), une baisse d'efficacité va suivre à cause d'une présence d'ammoniac en sortie de l'unité de dépollution 10, un minimum du signal va donc suivre ce maximum. C'est l'écart entre ces deux extrema qu'on veut évaluer.

On commence donc par calculer le maximum, tant que le signal augmente le minimum est égal au maximum. A partir du moment où le signal diminue, on va calculer le minimum. Si le signal repasse au-dessus du maximum déjà enregistré, on recommence le calcul (c'est que ce maximum n'était pas le maximum d'efficacité au cours de la phase de chargement). Il y a une hystérésis pour éviter de réinitialiser le calcul à cause du bruit du signal. A la fin de la phase de chargement on calcule la différence entre le maximum et le minimum du signal d'efficacité.

Phase C : pendant la phase de maintien, on calcule la différence moyenne entre l'efficacité du système mesurée, et l'efficacité estimée basée sur le modèle d'un système non dégradé.

On a ainsi mesuré la différence entre le maximum et le minimum d'efficacité pendant la phase de chargement et la différence moyenne entre l'efficacité mesurée filtrée et l'efficacité estimée pendant la phase de maintien. Ces deux grandeurs seront comparées à des seuils calibrés en fonction de la température de l'unité de dépollution 10 à la fin du test.

La consigne de chargement pendant le test doit être supérieure à la capacité maximale de stockage du module de traitement 11 seul, mais inférieure à la capacité maximale de stockage de l'ensemble des deux modules de traitement 11 et 12

Pour revenir en détail sur les figures 2a à 2d :
En (a) avant le test, la masse chargée d'ammoniac dans l'unité de dépollution est nulle.
En (b) : phase B de chargement du test, on a une consigne de stockage d'ammoniac élevée.
En (c) : phase C de maintien de la masse d'ammoniac à la consigne.
En (d) : phase B de chargement, le débit d'injection d'urée injectée est élevé.
En (e) : phase C de maintien, le débit d'injection d'urée injectée est plus faible.
En (f) : on constate une présence d'ammoniac en aval de l'unité de dépollution 10 (NH3 slip) avec un module de traitement 12 dégradé : on observe le pic de présence d'ammoniac en aval de l'unité de dépollution 10 à la fin de la phase de chargement, et ce phénomène continue pendant la phase C de maintien.
En (g) : pas de présence d'ammoniac en aval de l'unité de dépollution 10 avec un module de traitement 12 neuf.
En (h) : le signal d'efficacité avec un module de traitement 12 dégradé atteint son maximum au début de la phase de chargement et commence ensuite à décroitre à cause de la présence d'ammoniac en aval de l'unité de dépollution 10.
En (i) : le signal d'efficacité avec un module de traitement 12 dégradé (courbe NOK) atteint un minimum au moment où la consigne est atteinte ; en mesurant l'écart d'efficacité entre le point (f) et le point (g), on peut alors différencier un module de traitement 12 neuf d'un module de traitement 12 dégradé (avec un module de traitement 12 neuf on a un écart nul).
En (j) : le signal d'efficacité avec un module de traitement 12 neuf (courbe OK) augmente rapidement jusqu'à une valeur proche de 1 pendant la phase de chargement, et reste ensuite à une valeur élevé.
En (I) : le signal mesuré est assez éloigné de la valeur estimée avec un module de traitement 12 dégradé, la différence moyenne pendant la phase de maintien est grande.
En (k) : le signal mesuré est proche de la valeur estimée avec un module de traitement 12 neuf, la différence moyenne pendant la phase de maintien est faible, on peut alors également différencier un module de traitement 12 neuf d'un module de traitement 12 dégradé.

On peut aussi prévoir un deuxième schéma d'analyse, en intégrant les valeurs de taux d'ammoniac et/ou d'oxydes d'azote mesuré en aval de l'unité de dépollution 10, en en comparant ces valeurs en fin de phase B de chargement, et en fin de phase C de maintient à des seuils calibrés en fonction de la température, ce qui permet de différencier un module de traitement 12 neuf d'un module de traitement 12 dégradé.

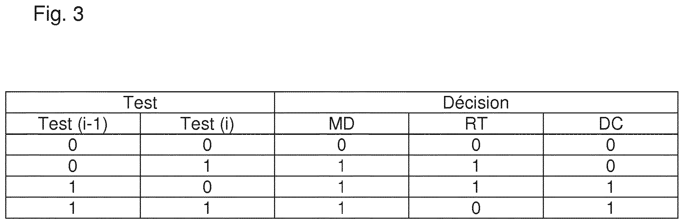

La figure 3 représente un exemple de décisions qui peuvent être prises suite au test. En effet, il est possible de comparer le résultat d'un test (i) avec le résultat d'au moins un test (i-1) précédent. On peut ajuster le nombre de tests précédents à prendre en compte. Il existe 3 décisions :
Passer en mode dégradé (MD) ;
Demander une relance du test (RT) ;
Confirmer le mode dégradé (DC).

Passer en mode dégradé (MD) demande au système de passer dans un mode sécuritaire pour éviter la présence d'ammoniac en aval de l'unité de dépollution 10. Cette sortie est à 0 si Demander une relance du test (RT) mais aussi test (i) et test (i-1),... sont tous à 0.

Demander une relance du test (RT) revient à faire un autre test de dégradation à la prochaine opportunité. Cette sortie est à 1 tant que test (i) mais aussi test (i-1),...ne sont pas tous à 0.

Confirmer le mode dégradé (DC) confirme définitivement une dégradation du module de traitement 12 (qui forme filtre à particules).

Dans ce cas, le système est en mode dégradé (Passer en mode dégradé (MD) = 1) et on ne lance plus de tests (Demander une relance du test (RT) = 1). En effet, lancer un test est consommateur de réducteur qu'on cherche à économiser de cette façon. Cette sortie est à 1 quand test(i) mais aussi test (i-1),...sont tous à 1.

Une fois que toutes les décisions ont été calculées, on sauvegarde test(i) dans une mémoire, qui remplace test (i-1),..., test (i-1),...remplace test (i-2),..., et ainsi de suite. Le résultat le plus ancien est ainsi effacé.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé de test d'une pluralité de modules de traitement (11, 12) de gaz d'échappement d'un véhicule automobile installés le long d'une ligne d'échappement et comprenant :
- une pluralité de modules de traitement (11, 12) d'oxydes d'azote par réduction catalytique sélective, chaque module de traitement (11, 12) étant agencé pour pouvoir stocker une masse d'ammoniac maximale,
- des moyens d'injection (20) d'ammoniac ou d'un précurseur de l'ammoniac, tel que de l'urée, en amont de la pluralité de modules de traitement (11, 12) des oxydes d'azote,
- des moyens de mesure (30) de présence d'au moins une espèce parmi les oxydes d'azote et l'ammoniac, en aval de la pluralité de modules de traitement (11, 12),
le procédé comprenant :
une phase de test avec les étapes consistant à :
- stopper pendant un temps prédéterminé une injection d'ammoniac ou de précurseur de l'ammoniac,
- injecter, en amont des modules de traitement (11, 12), une quantité d'ammoniac ou de précurseur d'ammoniac, conduisant à une masse d'ammoniac à stocker au moins supérieure à une masse de stockage maximale d'ammoniac d'un seul module de traitement (11, 12) et inférieure à la somme des masses de stockage maximales de tous les modules de traitement (11, 12),
- mesurer un taux d'ammoniac et/ou d'oxydes d'azote en aval de la pluralité de modules de traitement (11, 12),
une phase d'analyse avec l'étape consistant à :
- comparer le taux d'ammoniac et/ou d'oxydes d'azote mesuré avec un seuil prédéterminé.

2. Procédé selon la revendication précédente, dans lequel la phase de test comprend une étape consistant à :
- mesurer une température des gaz d'échappement, et
dans lequel la phase d'analyse comprend une étape consistant à :
- avant l'étape de comparaison avec le seuil prédéterminé, corriger les taux d'ammoniac et/ou d'oxydes d'azote mesuré et/ou le seuil prédéterminé, en fonction de la température mesurée.

3. Procédé selon l'une des revendications précédentes, dans lequel la phase de test est initiée après une phase de régénération d'un filtre à particules de la ligne d'échappement du véhicule.

4. Procédé selon l'une des revendications précédentes, dans lequel au moins l'un des modules de traitement (11, 12) forme un filtre à particules.

5. Procédé selon l'une des revendications précédentes, dans lequel l'étape consistant à injecter une quantité d'ammoniac, ou de précurseur d'ammoniac, comprend :
- une étape de chargement pendant laquelle un premier débit d'ammoniac ou de précurseur d'ammoniac est injecté pour que la quantité d'ammoniac à stocker par les modules de traitement (11, 12) arrive à une consigne de stockage, et
- une étape de maintient pendant laquelle un deuxième débit d'ammoniac ou de précurseur d'ammoniac, inférieur au premier débit d'ammoniac ou de précurseur d'ammoniac, est injecté pour maintenir la quantité d'ammoniac à stocker à la consigne de stockage.

6. Procédé selon l'une des revendications précédentes, dans lequel, la phase d'analyse comprend une étape consistant à :
- enregistrer dans une mémoire le résultat de comparaison comme un résultat conforme si le taux mesuré est inférieur au seuil prédéterminé et comme un résultat non conforme si le taux mesuré est supérieur au seuil prédéterminé, et
si le résultat est non conforme, l'étape de comparaison de la phase d'analyse est suivie de :
- une étape consistant à planifier une relance de la phase de test et de la phase d'analyse.

7. Véhicule automobile comprenant une ligne d'échappement avec une unité de dépollution comprenant :
- une pluralité de modules de traitement (11, 12) d'oxydes d'azote par réduction catalytique sélective, chaque module de traitement (11, 12) étant agencé pour pouvoir stocker une masse d'ammoniac maximale,
- des moyens d'injection (20) d'ammoniac ou d'un précurseur de l'ammoniac, tel que de l'urée, en amont de la pluralité de modules de traitement (11, 12) des oxydes d'azote,
- des moyens de mesure (30) de présence d'au moins une espèce parmi les oxydes d'azote et l'ammoniac, en aval de la pluralité de modules de traitement (11, 12),
le véhicule comprenant une unité de commande agencée pour mettre en oeuvre le procédé de test selon l'une des revendications précédentes.

8. Véhicule automobile selon la revendication précédente, dans lequel au moins l'un des modules de traitement (11, 12) forme un filtre à particules.

## Patentansprüche

1. Testverfahren einer Mehrzahl von Abgas-Aufbereitungsmodulen (11, 12) eines Kraftfahrzeugs, die entlang eines Abgasstrangs installiert sind und Folgendes umfassen:
- eine Mehrzahl von Stickstoffoxid-Aufbereitungsmodulen (11, 12) durch selektive katalytische Reduktion, wobei jedes Aufbereitungsmodul (11, 12) eingerichtet ist, um eine maximale Ammoniakmasse lagern zu können,
- Mittel zum Einspritzen (20) von Ammoniak oder eines Ammoniakvorläufers, wie Harnstoff, stromaufwärts der Mehrzahl von Stickstoffoxid-Aufbereitungsmodulen (11, 12),
- Mittel zum Messen (30) des Vorhandenseins mindestens einer Spezies unter den Stickstoffoxiden und dem Ammoniak stromabwärts der Mehrzahl von Aufbereitungsmodulen (11, 12),
wobei das Verfahren Folgendes umfasst:
eine Testphase mit Schritten, die bestehen aus:
- Stoppen während einer vorbestimmten Zeit einer Injektion von Ammoniak oder Vorläufer des Ammoniaks,
- Einspritzen stromaufwärts der Aufbereitungsmodule (11, 12) einer Menge an Ammoniak oder Ammoniakvorläufer, die zu einer zu lagernden Ammoniakmasse führt, die mindestens größer ist als eine maximale Ammoniaklagermasse eines einzigen Aufbereitungsmoduls (11, 12) und kleiner als die Summe der maximalen Lagermassen aller Aufbereitungsmodule (11, 12),
- Messen einer Ammoniak- und/oder Stickstoffoxidrate stromabwärts der Mehrzahl von Aufbereitungsmodulen (11, 12), eine Analysephase mit dem Schritt, der aus Folgendem besteht:
- Vergleichen der gemessenen Ammoniak- und/oder Stickstoffoxidrate mit einem vorbestimmten Schwellenwert.

2. Verfahren nach dem vorstehenden Anspruch, wobei die Testphase einen Schritt umfasst, der aus Folgendem besteht:
- Messen einer Temperatur der Abgase, und
wobei die Analysephase einen Schritt umfasst, der aus Folgendem besteht:
- vor dem Schritt des Vergleichs mit dem vorbestimmten Schwellenwert, Korrigieren der gemessenen Ammoniak- und/oder Stickstoffoxidraten und/oder des vorbestimmten Schwellenwerts in Abhängigkeit von der gemessenen Temperatur.

3. Verfahren nach einem der vorstehenden Ansprüche, wobei die Testphase nach einer Regenerierungsphase eines Partikelfilters des Abgasstrangs des Fahrzeugs initiiert wird.

4. Verfahren nach einem der vorstehenden Ansprüche, wobei mindestens eines der Aufbereitungsmodule (11, 12) ein Partikelfilter bildet.

5. Verfahren nach einem der vorstehenden Ansprüche, wobei der Schritt, der darin besteht, eine Menge an Ammoniak oder Ammoniakvorläufer einzuspritzen, Folgendes umfasst:
- einen Ladeschritt, während dem ein erster Ammoniak- oder Ammoniakvorläuferdurchsatz eingespritzt wird, damit die Menge an Ammoniak, die von den Aufbereitungsmodulen (11, 12) zu lagern ist, an einem Lagersollwert ankommt, und
- einen Halteschritt, während dem ein zweiter Ammoniak- oder Ammoniakvorläuferdurchsatz, der kleiner ist als der erste Ammoniak- oder Ammoniakvorläuferdurchsatz, eingespritzt wird, um die zu lagernde Ammoniakmenge an dem Lagersollwert zu halten.

6. Verfahren nach einem der vorstehenden Ansprüche, wobei die Analysephase einen Schritt umfasst, der aus Folgendem besteht:
- Aufzeichnen in einem Speicher des Vergleichsresultats als ein konformes Resultat, falls die gemessene Rate kleiner ist als der vorbestimmte Schwellenwert, und als ein nicht konformes Resultat, falls die gemessene Rate größer ist als der vorbestimmte Schwellenwert, und falls das Resultat nicht konform ist, auf den Vergleichsschritt der Analysephase Folgendes folgt:
- ein Schritt, der darin besteht, ein Neustarten der Testphase und der Analysephase zu planen.

7. Kraftfahrzeug, das einen Abgasstrang mit einer Reinigungseinheit umfasst, die Folgendes umfasst:
- eine Mehrzahl von Modulen (11, 12) zur Aufbereitung von Stickstoffoxid durch selektive katalytische Reduktion, wobei jedes Aufbereitungsmodul (11, 12) eingerichtet ist, um eine maximale Ammoniakmasse lagern zu können,
- Mittel zum Einspritzen (20) von Ammoniak oder eines Ammoniakvorläufers, wie Harnstoff, stromaufwärts der Mehrzahl von Aufbereitungsmodulen (11, 12) der Stickstoffoxide,
- Mittel zum Messen (30) der Gegenwart mindestens einer Spezies unter den Stickstoffoxiden und dem Ammoniak stromabwärts der Mehrzahl von Aufbereitungsmodulen (11, 12),
wobei das Fahrzeug eine Steuereinheit umfasst, die eingerichtet ist, um das Testverfahren nach einem der vorstehenden Ansprüche umzusetzen.

8. Kraftfahrzeug nach dem vorstehenden Anspruch, wobei mindestens eines der Aufbereitungsmodule (11, 12) ein Partikelfilter bildet.

## Claims

1. A method for testing a plurality of processing modules (11, 12) of exhaust gas of a motor vehicle which are installed along an exhaust line and including:
- a plurality of processing modules (11, 12) of nitrogen oxides by selective catalytic reduction, each processing module (11, 12) being arranged so as to be able to store a maximum mass of ammonia,
- injection means (20) of ammonia or of an ammonia precursor, such as urea, upstream of the plurality of processing modules (11, 12) of nitrogen oxides,
- means (30) for measuring the presence of at least one species among nitrogen oxides and ammonia, downstream of the plurality of processing modules (11, 12),
the method including:
a testing phase with the steps consisting of:
- stopping during a predetermined time an injection of ammonia or of ammonia precursor,
- injecting, upstream of the processing modules (11, 12), a quantity of ammonia or of ammonia precursor, leading to a mass of ammonia to be stored which is at least greater than a maximum storage mass of ammonia of a single processing module (11, 12) and less than the sum of the maximum storage masses of all the processing modules (11, 12),
- measuring a level of ammonia and/or of nitrogen oxides downstream of the plurality of processing modules (11, 12),
an analysis phase with the step consisting of:
- comparing the measured level of ammonia and/or of nitrogen oxides with a predetermined threshold.

2. The method according to the preceding claim, in which the testing phase includes a step consisting of:
- measuring a temperature of the exhaust gases, and in which the analysis phase includes a step consisting of:
- before the step of comparison with the predetermined threshold, correcting the measured levels of ammonia and/or of nitrogen oxides and/or the predetermined threshold, as a function of the measured temperature.

3. The method according to one of the preceding claims, in which the testing phase is initiated after a regeneration phase of a particle filter of the exhaust line of the vehicle.

4. The method according to one of the preceding claims, in which at least one of the processing modules (11, 12) forms a particle filter.

5. The method according to one of the preceding claims, in which the step consisting of injecting a quantity of ammonia, or of ammonia precursor, includes:
- a charging step during which a first flow of ammonia or of ammonia precursor is injected so that the quantity of ammonia to be stored by the processing modules (11, 12) reaches a storage setpoint, and
- a maintaining step during which a second flow of ammonia or of ammonia precursor, less than the first flow of ammonia or of ammonia precursor, is injected to maintain the quantity of ammonia to be stored at the storage setpoint.

6. The method according to one of the preceding claims, in which the analysis phase includes a step consisting of:
- recording in a memory the comparison result as a compliant result if the measured level is less than the predetermined threshold, and as a non-compliant result if the measured level is greater than the predetermined threshold, and if the result is non-compliant, the comparison step of the analysis phase is followed by:
- a step consisting of arranging a relaunch of the testing phase and of the analysis phase.

7. A motor vehicle including an exhaust line with a pollution-removal unit including:
- a plurality of processing modules (11, 12) of nitrogen oxides by selective catalytic reduction, each processing module (11, 12) being arranged so as to be able to store a maximum mass of ammonia,
- injection means (20) of ammonia or of an ammonia precursor, such as urea, upstream of the plurality of processing modules (11, 12) of the nitrogen oxides,
- means (30) for measuring the presence of at least one species among nitrogen oxides and ammonia, downstream of the plurality of processing modules (11, 12),
the vehicle including a control unit arranged to implement the testing method according to one of the preceding claims.

8. The motor vehicle according to the preceding claim, in which at least one of the processing modules (11, 12) forms a particle filter.
